# DEMANDE DE BREVET EUROPEEN

(11) **EP 3 093 813 A1**
(43) Date de publication de la demande: **16.11.2016**
(21) Numéro de dépôt: 16170839.1
(22) Date de dépôt: 08.02.2013
(51) Int. Cl.: G06Q 20/28, G06Q 20/36

(54) **SYSTÈME DE PAIEMENT, TERMINAL DE PAIEMENT DE CE SYSTÈME, ET PROCÉDÉ DE PAIEMENT ASSOCIÉ**

(30) Priorité: 09.02.2012 FR 1200388
(62) Demande divisionnaire de: 13703104.3
(71) Demandeur: Thales, 92200 Neuilly Sur Seine (FR)
(72) Inventeur: D'ATHIS, Thierry, 91229 Bretigny Sur Orge Cedex (FR); LEONETTI, Jean, 91229 Bretigny Sur Orge Cedex (FR); RATIER, Denis, 91229 Bretigny Sur Orge Cedex (FR)
(74) Mandataire: Lavoix

(57) **Abrégé**

Ce système de paiement (10) comprend un terminal de paiement (12) et un support de paiement électronique (14) adapté pour dialoguer avec le terminal de paiement (12), le support de paiement (14) étant porteur d'un montant ayant une première valeur résiduelle, et comprend :
- une première mémoire (34) réinscriptible, et
- une deuxième mémoire (36) à fusibles, comprenant une pluralité de bits (1, 2, 3, 4, 5, 6, 7, 8) adaptés pour changer d'état une unique fois chacun.

Le terminal de paiement (12) est programmé pour déduire la première valeur résiduelle de la lecture conjointe des première et deuxième mémoires (34, 36).

## Description

La présente invention concerne un système de paiement et un support de paiement électronique adapté pour dialoguer avec le terminal de paiement, le support de paiement étant porteur d'un montant ayant une première valeur résiduelle, et comprenant :
- une première mémoire réinscriptible, et
- une deuxième mémoire à fusibles, comprenant une pluralité de bits adaptés pour changer d'état une unique fois chacun.

De nos jours, les systèmes de paiement utilisant des supports de paiement électroniques se multiplient. Ces systèmes de paiement sont particulièrement avantageux car ils permettent une automatisation de la transaction de paiement, et donc une accélération de celle-ci. Les supports de paiement électroniques utilisés regroupent des objets aussi différents que les porte-monnaie électroniques, porteurs d'une monnaie fiduciaire, les cartes de paiement, qui permettent le débit d'un compte en banque suite à la télétransmission d'un ordre de paiement, et les cartes prépayées, distribuées par certains organismes et porteuses d'un montant monétaire ou non monétaire (comme des unités de transport) électronique représentatif d'une somme d'argent versée par l'utilisateur de la carte à l'organisme distributeur.

Des exemples de cartes prépayées sont les cartes de cantine, les cartes de magasin, les cartes de location, les cartes de publiphone ou, les cartes de transports en commun.

Ces cartes prépayées doivent répondre à deux objectifs contradictoires : elles doivent d'une part avoir un coût de production minimal, et d'autre part présenter une sécurité suffisante pour éviter des manipulations frauduleuses de la valeur résiduelle du montant monétaire enregistré sur la carte.

Il existe des cartes prépayées comportant un cryptoprocesseur, c'est-à-dire un processeur optimisé pour les tâches de cryptographie, adaptés pour bloquer l'accès à la mémoire de la carte à des terminaux non-autorisés. Toutefois, ces cartes ont un coût de fabrication élevé.

Il existe des supports à coût réduit, tels que les tickets sans contact, comportant simplement des moyens de communication avec un terminal, une mémoire réinscriptible, et une mémoire à fusibles (dite mémoire OTP, pour « one time programmable »). En particulier, ces supports à coût réduit ne comprennent pas de processeur.

Toutefois, l'utilisation de ces supports comme cartes prépayées est problématique. En effet, si le montant est écrit dans la mémoire réinscriptible du support, il est facile pour une personne mal intentionnée de frauder en réécrivant la valeur résiduelle de ce montant ; l'exigence de sécurité de la carte prépayée n'est alors pas remplie. Une autre solution est de faire correspondre la valeur résiduelle du montant chargé sur la carte aux états des bits de la mémoire à fusibles. Cependant, le faible nombre de bits de la mémoire à fusibles (généralement quelques dizaines) empêche d'utiliser cette mémoire pour valoriser un équivalent monétaire.

Un objectif de l'invention est donc de proposer un système et un procédé de paiement utilisant des supports de paiement à faible coût et adaptés pour limiter les possibilités de fraude. D'autres objectifs sont d'assurer l'atomicité et la cohérence des transactions de paiement.

A cet effet, l'invention a pour objet un système de paiement du type précité, dans lequel le terminal de paiement est programmé pour déduire la première valeur résiduelle de la lecture conjointe des première et deuxième mémoires.

Selon des modes de réalisation préférés de l'invention, le système de paiement présente l'une ou plusieurs des caractéristiques suivantes, prise(s) isolément ou suivant toute(s) combinaison(s) techniquement possible(s) :
- le support de paiement est un support sans contact, adapté pour dialoguer à distance avec le terminal de paiement ;
- le système de paiement est programmé pour mettre en oeuvre un procédé tel que défini ci-dessous.

L'invention a également pour objet un terminal de paiement d'un système tel que défini ci-dessus.

L'invention a en outre pour objet un procédé de paiement au moyen d'un support de paiement adapté pour dialoguer à distance avec un terminal de paiement, le support de paiement étant porteur d'un montant et comprenant une première mémoire réinscriptible et une deuxième mémoire à fusibles, comprenant une pluralité de bits adaptés pour changer d'état une unique fois chacun, caractérisé en ce qu'il comprend les étapes successives suivantes :
- mise en communication du support de paiement avec le terminal de paiement, le montant ayant une première valeur résiduelle
- lecture des première et deuxième mémoires, et
- déduction de la première valeur résiduelle à partir des données lues dans les première et deuxième mémoires.

Selon des modes de réalisation préférés de l'invention, le procédé de paiement présente l'une ou plusieurs des caractéristiques suivantes, prise(s) isolément ou suivant toute(s) combinaison(s) techniquement possible(s) :
- ledit procédé de paiement comprend les étapes suivantes :
   - affectation au montant d'une deuxième valeur résiduelle, inférieure à la première valeur résiduelle en remplacement de la première valeur résiduelle, et
   - changement d'état d'au moins un bit de la deuxième mémoire, le ou chaque bit passant d'un premier état à un deuxième état, lorsque la différence entre les première et deuxième valeurs résiduelles est supérieure à une valeur seuil.
- le nombre de bits changeant d'état est fonction de la différence entre les première et deuxième valeurs résiduelles ;
- une image de la première valeur résiduelle est enregistrée dans la première mémoire, et le procédé comprend une étape d'écriture dans la première mémoire d'une image de la deuxième valeur résiduelle, en remplacement de l'image de la première valeur résiduelle ;
- une image de la première valeur résiduelle est enregistrée dans la première mémoire, et le procédé comprend en outre les étapes suivantes :
   - détermination d'une plage de valeurs résiduelles autorisées pour le montant, fonction des états des bits de la deuxième mémoire,
   - contrôle de l'adéquation entre l'image de la première valeur résiduelle et la plage de valeur résiduelles autorisées, et
   - si l'image de la première valeur résiduelle est supérieure à la plage de valeur résiduelles autorisées, refus du paiement, ou changement de l'image de la première valeur résiduelle pour qu'elle soit comprise dans la plage de valeurs résiduelles autorisées ;
- si la première valeur résiduelle est inférieure à la plage de valeurs résiduelles autorisées, ledit procédé de paiement comprend une étape de changement de l'image de la première valeur résiduelle pour qu'elle soit comprise dans la plage de valeurs résiduelles autorisées ;
- le procédé comprend également une étape d'écriture d'une sauvegarde du montant dans la première mémoire,
   le procédé est tel que :
   - l'étape de changement d'état du ou de chaque bit a lieu après l'étape d'écriture de l'image de la deuxième valeur résiduelle,
   - une sauvegarde du montant, ayant une première valeur de sauvegarde, est enregistrée dans la première mémoire lors de la mise en communication du support de paiement avec le terminal de paiement, et en ce que
   - le procédé comprend une étape supplémentaire d'écriture d'une deuxième valeur de sauvegarde, égale à la deuxième valeur résiduelle, en remplacement de la première valeur de sauvegarde, cette étape faisant suite à l'étape de changement d'état d'au moins un bit de la deuxième mémoire ;
- ledit procédé de paiement comprend en outre les étapes suivantes :
   - détermination d'une plage de valeurs résiduelles autorisées pour le montant, fonction des états des bits de la deuxième mémoire,
   - contrôle de l'adéquation de l'image de la première valeur résiduelle et de la première valeur de sauvegarde avec la plage de valeur résiduelles autorisées, et
   - si l'image de la première valeur résiduelle est hors de la plage de valeurs résiduelles autorisées et la première valeur de sauvegarde est dans la plage de valeurs résiduelles autorisées, changement de l'image de la première valeur résiduelle pour qu'elle soit égale à la première valeur de sauvegarde, ou
   - si l'image de la première valeur résiduelle est dans la plage de valeurs résiduelles autorisées et la première valeur de sauvegarde est hors de la plage de valeurs résiduelles autorisées, changement de la première valeur de sauvegarde pour qu'elle soit égale à l'image de la première valeur résiduelle.
- l'étape de détermination de la plage de valeurs résiduelles autorisées comprend les étapes suivantes :
   - association d'une plage prédéterminée de valeurs à chaque bit de la deuxième mémoire,
   - identification du dernier bit de la deuxième mémoire à avoir changé d'état, et
   - détermination de la plage de valeurs résiduelles autorisées comme étant égale à la plage prédéterminée associée au bit identifié.
- l'étape de détermination de la plage de valeurs résiduelles autorisées comprend les étapes suivantes :
   - association d'une plage prédéterminée de valeurs à chaque nombre entier compris entre zéro et le nombre de bits,
   - décompte du nombre de bits de la deuxième mémoire n'ayant pas changé d'état, et
   - détermination de la plage de valeurs résiduelles autorisées comme étant égale à la plage prédéterminée associée au nombre de bits décomptés.

D'autres caractéristiques et avantages de l'invention apparaîtront à la lecture de la description qui va suivre, donnée uniquement à titre d'exemple et faite en se référant aux dessins annexés, sur lesquels :
- la Figure 1 est une vue schématique d'un système de paiement selon l'invention, lorsqu'un support de paiement de ce système n'a jamais été utilisé,
- la Figure 2 est une vue similaire à la Figure 1, lorsqu'un montant qui était chargé sur le support a été complètement dépensé,
- la Figure 3 est un schéma illustrant un lien entre les états de bits d'une mémoire à fusibles du support et une plage de valeurs résiduelles autorisées pour le montant, selon un premier mode de réalisation de l'invention,
- la Figure 4 est un schéma illustrant un lien entre les états de bits d'une mémoire à fusibles du support et une plage de valeurs résiduelles autorisées pour le montant, selon un deuxième mode de réalisation de l'invention,
- la Figure 5 est une vue similaire à la Figure 1, suite à une étape de changement d'une image de la valeur résiduelle du montant chargé sur le support,
- la Figure 6 est une vue similaire à la Figure 1, suite à une étape de changement d'état de plusieurs bits de la mémoire à fusibles,
- la Figure 7 est une vue similaire à la Figure 1, suite à une étape d'écriture d'une nouvelle valeur de sauvegarde du montant dans une mémoire réinscriptible du support,
- la Figure 8 est un diagramme en blocs illustrant un procédé selon l'invention.

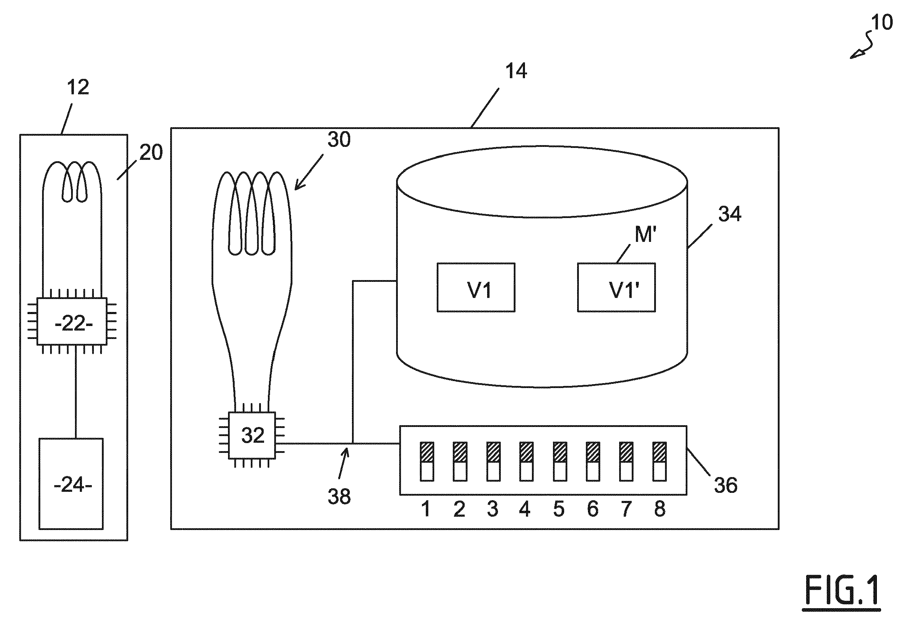

Le système 10 de paiement selon l'invention, représenté sur la Figure 1, comprend un terminal de paiement 12, et un support de paiement sans contact 14, adapté pour dialoguer à distance avec le terminal de paiement 12 pour réaliser une transaction de paiement.

De façon connue, le terminal de paiement 12 comprend une antenne 20, un module radio 22 selon la norme ISO 14443, adapté pour gérer les échanges de données à distance entre le terminal 12 et le support 14, et un module 24 de gestion de la transaction de paiement entre le terminal 12 et le support 14.

Le support de paiement 14 comprend une antenne 30, un module radio 32 selon la norme ISO 14443, adapté pour gérer les échanges de données à distance entre le terminal 12 et le support 14, une première mémoire 34 réinscriptible, une deuxième mémoire 36 à fusibles, et une liaison série 38 mettant en communication le module radio 32 avec les mémoires 34, 36. En particulier, le support de paiement 14 ne comprend pas de cryptoprocesseur.

Le support de paiement 14 est porteur d'un montant, avec une première valeur résiduelle. Le montant est divisé en unités, elle-même divisées en subdivisions ; par exemple, dans le cas d'un montant monétaire en euros, les unités sont les euros, et les subdivisions sont les centimes d'euros. La première valeur résiduelle est formulée en nombre d'unités et de subdivisions.

Le montant est de préférence un montant monétaire. Il correspond à une somme d'argent versée par l'utilisateur du support 14 à un distributeur du support 14 pour acquérir le support 14. La valeur résiduelle est égale à la valeur initiale du montant, à laquelle ont été retirées les éventuelles dépenses déjà effectuées par l'utilisateur du support 14 au moyen du support 14.

Le support de paiement 14 est non rechargeable, c'est-à-dire que, une fois le montant intégralement dépensé, il n'est plus possible d'utiliser le support de paiement 14.

La mémoire à fusibles 36 comprend une pluralité de bits 1, 2, 3, 4, 5, 6, 7, 8, chaque bit 1, 2, 3, 4, 5, 6, 7, 8 étant adapté pour être sélectivement dans un premier ou un deuxième état, et pour changer d'état une unique fois. En particulier, chaque bit 1, 2, 3, 4, 5, 6, 7, 8 est autorisé à basculer du premier état dans le deuxième état, mais il lui est impossible de revenir du deuxième état vers le premier état.

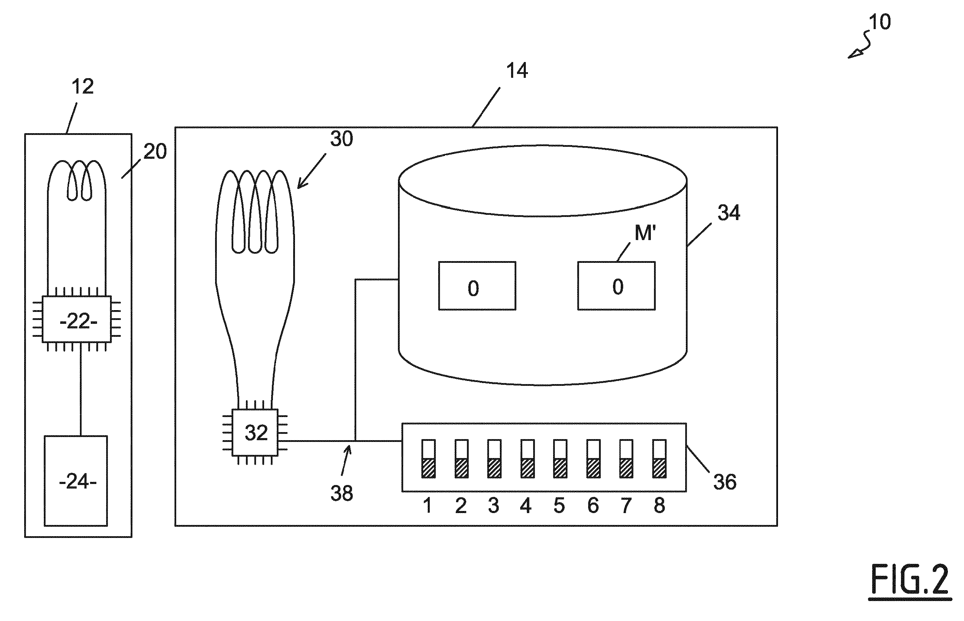

Dans l'exemple représenté sur la Figure 1, tous les bits 1, 2, 3, 4, 5, 6, 7, 8 sont dans le premier état. Cela correspond à la configuration du support 14 lors de son acquisition par son utilisateur. Dans l'exemple représenté sur la Figure 2, tous les bits 1, 2, 3, 4, 5, 6, 7, 8 sont le deuxième état. Cela correspondant à la configuration du support 14 lorsque l'intégralité du montant a été dépensée.

Le module de gestion 24 est programmé pour déduire la première valeur résiduelle du montant de la lecture conjointe des première et deuxième mémoires 34, 36. En particulier, par « lecture conjointe », on comprend qu'il est nécessaire au module de gestion 24 de lire ces deux mémoires 34, 36 pour en déduire la première valeur résiduelle, la lecture d'une seule de ces mémoires 34, 36 n'étant pas suffisante à la déduction de la première valeur résiduelle. Ce point sera détaillé dans la suite.

Le module de gestion 24 est également programmé pour :
- calculer une deuxième valeur résiduelle du montant, égale à la différence entre la première valeur résiduelle et le prix d'un achat réglé au cours de la transaction de paiement,
- affecter la deuxième valeur résiduelle au montant, en remplacement de la première valeur résiduelle, et
- commander le changement d'état d'au moins un bit 6, 7, 8 de la deuxième mémoire 36, du premier état dans le deuxième état, lorsque la différence entre les première et deuxième valeurs résiduelles est supérieure à une valeur seuil.

Dans un premier mode de réalisation de l'invention, illustré par les Figures 1 à 8, une image V₁ de la première valeur résiduelle est enregistrée dans la première mémoire 34. Sous réserve que la dernière transaction de paiement dans laquelle a été impliqué le support 14 se soit déroulée correctement, cette image V₁ est égale à la première valeur résiduelle.

Une sauvegarde M' du montant est également enregistrée dans la première mémoire 34. Cette sauvegarde M' a une première valeur de sauvegarde V₁'. Sous réserve que la dernière transaction de paiement dans laquelle a été impliquée le support 14 se soit déroulée correctement, la première valeur de sauvegarde V₁' est égale à la première valeur résiduelle.

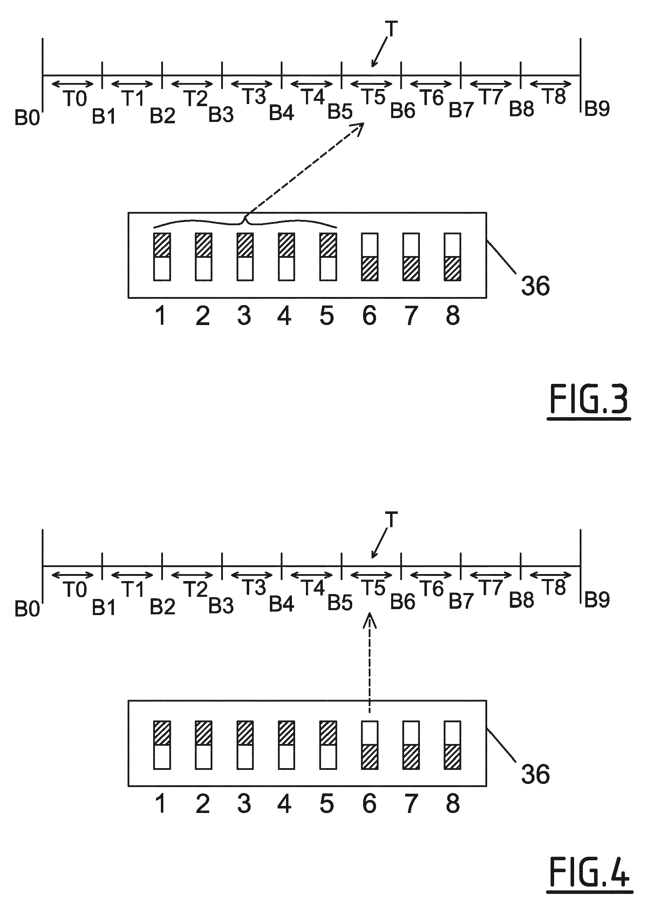

En référence aux Figures 3 et 4, le module de gestion 24 est programmé pour déterminer une plage T de valeurs résiduelles autorisées pour le montant en fonction des états des bits 1, 2, 3, 4, 5, 6, 7, 8 de la deuxième mémoire 36. Ainsi, un utilisateur mal intentionné qui tenterait de changer frauduleusement l'image de la première valeur résiduelle V₁ pour en augmenter la valeur ne pourrait aller au-delà de la plage de valeurs résiduelles autorisées T sans que cela soit détecté par le terminal de paiement 12. Les risques de fraude sont ainsi réduits.

A cet effet, dans une première variante de l'invention, illustrée par la Figure 3, le module de gestion 24 associe une plage prédéterminée T₀, ..., Tᵢ, ..., T₈ de valeurs à chaque nombre entier i compris entre zéro et le nombre de bits 1, 2, 3, 4, 5, 6, 7, 8. Chaque plage prédéterminée, respectivement T₀, ..., Tᵢ, ... T₈, est bornée par une borne inférieure, respectivement B₀, ..., Bᵢ, ... B₈, et par une borne supérieure, respectivement B₁, ..., Bᵢ₊₁, ... B₉. La plus petite borne inférieure B₀ est la valeur 0, et la plus grande borne supérieure B₉ est la valeur initiale du montant.

De préférence, la borne B₁ est la plus petite valeur immédiatement supérieure à 0. Ainsi, la plage prédéterminée T₀ se limite à la valeur 0.

Le module de gestion 24 est adapté pour, à chaque transaction de paiement, décompter les bits 1, 2, 3, 4, 5, 6, 7, 8 de la deuxième mémoire 36 qui sont dans le premier état, et pour déterminer la plage T de valeur résiduelles autorisées comme étant égale à la plage prédéterminée T₀, ..., Tᵢ, ... T₈ associée au nombre de bits décomptés. Dans l'exemple représenté sur la Figure 3, le nombre de bits 1, 2, 3, 4, 5 qui sont dans le premier état étant égal à cinq, le module de gestion 24 détermine que la plage T de valeurs résiduelles autorisées est la plage prédéterminée T₅.

Dans une deuxième variante préférée de l'invention, illustrée par la Figure 4, chaque plage prédéterminée T₀, ..., Tᵢ, ..., T₈ est associée non à un nombre entier i, mais à un bit i-1 particulier. A cet effet, le module de gestion 24 est adapté pour identifier chaque bit 1, 2, 3, 4, 5, 6, 7, 8 de la deuxième mémoire 36 de manière spécifique. Un moyen de réaliser une telle identification spécifique est connu de l'homme du métier et ne sera pas décrit ici.

Le module de gestion 24 est également programmé pour identifier le dernier bit 1, 2, 3, 4, 5, 6, 7, 8 ayant changé d'état. Cela est par exemple réalisé en conférant un ordre particulier aux bits 1, 2, 3, 4, 5, 6, 7, 8 de la deuxième mémoire 36, les bits 1, 2, 3, 4, 5, 6, 7, 8 changeant d'état selon cet ordre particulier. Le dernier bit 1, 2, 3, 4, 5, 6, 7, 8 ayant changé d'état est ainsi facilement identifiable comme étant le bit dans le deuxième état le plus avancé dans l'ordre de changement d'état. Dans l'exemple représenté, les bits 1, 2, 3, 4, 5, 6, 7, 8 changent d'état selon l'ordre inverse de leur numérotation, et le dernier bit à avoir changé d'état est le bit 6.

Le module de gestion 24 est enfin programmé pour déterminer la plage T de valeurs résiduelles autorisées comme étant égale à la plage prédéterminée T₀, ..., Tᵢ, ..., T₈ associée au dernier bit ayant changé d'état. Dans l'exemple représenté, la plage T est ainsi égale à la plage prédéterminée associée au bit 6, à savoir T₇.

On notera qu'il est possible, notamment lors de la première utilisation du support 14, qu'aucun bit n'ait encore changé d'état. La plage prédéterminée T₈ est associée à ce cas.

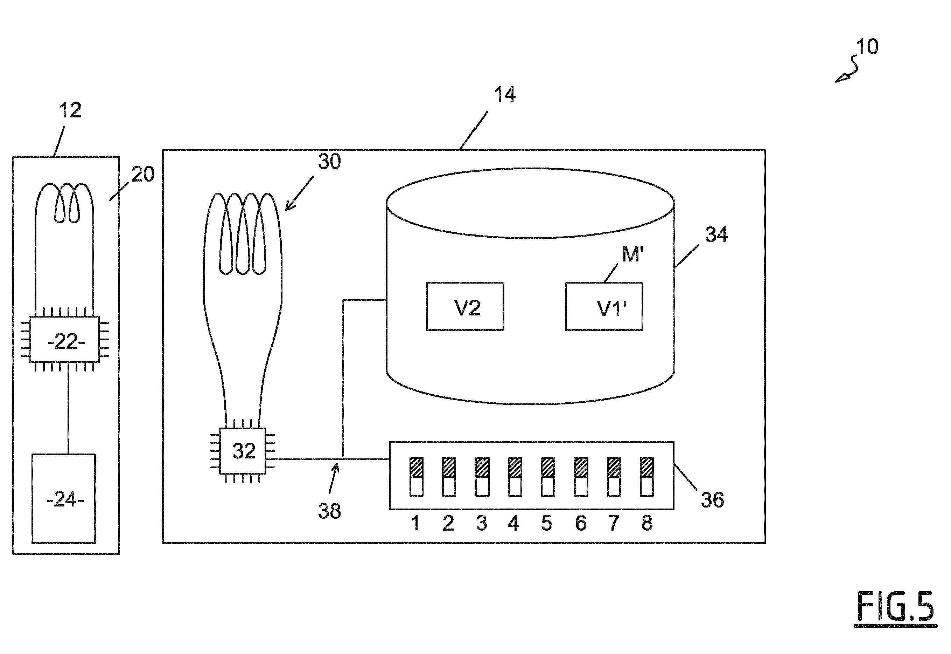

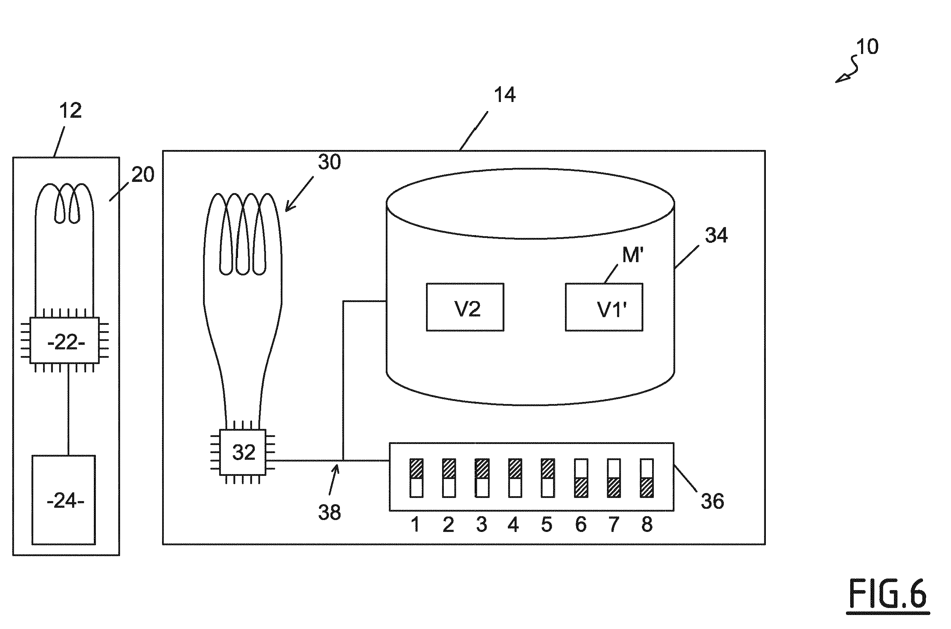

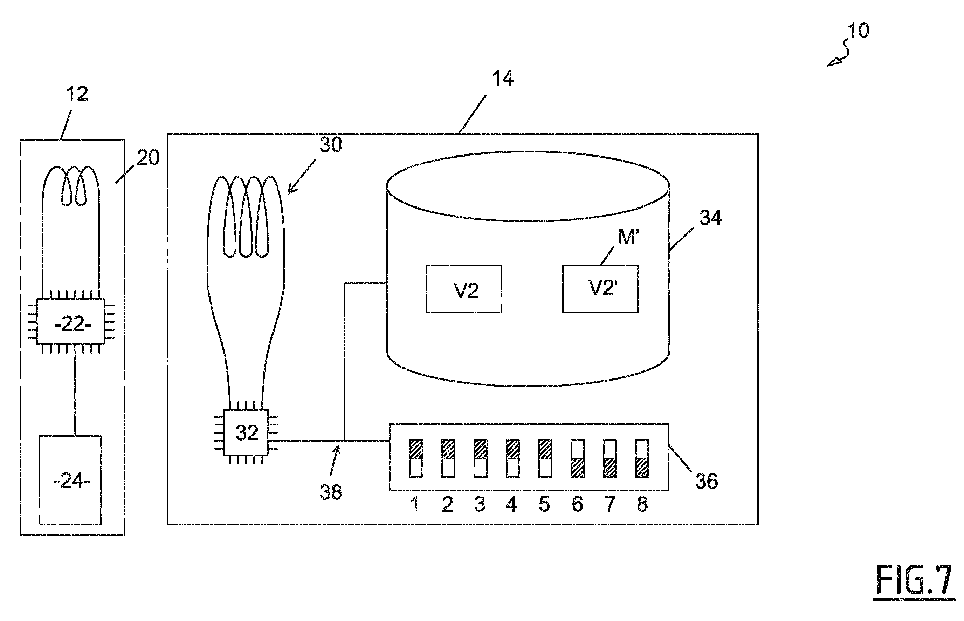

Le module de gestion 24 est en outre programmé pour effectuer les opérations successives suivantes, lors d'une transaction de paiement au moyen du support 14 au cours de laquelle l'utilisateur du support 14 règle un achat à un prix donné :
- déterminer la plage T de valeurs résiduelles autorisées pour le montant,
- contrôler l'adéquation de l'image de la première valeur résiduelle V₁ et de la première valeur de sauvegarde V₁' avec la plage T de valeurs résiduelles autorisées, c'est-à-dire contrôler que l'image de la première valeur résiduelle V₁ et la première valeur de sauvegarde V₁' sont comprises dans la plage T, et
   ∘ refuser le paiement et mettre fin à la transaction de paiement si l'image de la première valeur résiduelle V₁ est supérieure à la plage T, ou
   ∘ changer l'image de la première valeur résiduelle V₁ pour qu'elle soit égale à la première valeur de sauvegarde V₁', si l'image de la première valeur résiduelle V₁ est hors de la plage T et la valeur de sauvegarde V₁' est dans la plage T, ou
   ∘ changer la première valeur de sauvegarde V₁' pour qu'elle soit égale à l'image de la valeur résiduelle V₁, si l'image de la valeur résiduelle V₁ est dans la plage T et la valeur résiduelle de sauvegarde V₁' est hors de la plage T, ou
   ∘ changer l'image de la première valeur résiduelle V₁ pour qu'elle soit égale à la borne inférieure de la plage T, et changer la première valeur de sauvegarde V₁' pour qu'elle soit égale à la nouvelle première valeur résiduelle, si l'image de la première valeur résiduelle V₁ et la première valeur de sauvegarde V₁' sont toutes les deux hors de la plage T, ou
   ∘ laisser l'image de la première valeur résiduelle V₁ et la première valeur de sauvegarde V₁' inchangées, si elles sont toutes deux dans la plage T,
- autoriser le paiement,
- remplacer l'image de la première valeur résiduelle V₁ par une image de la deuxième valeur résiduelle V₂ (Figure 5),
- si la deuxième valeur résiduelle V₂ n'est pas dans la plage T de valeurs résiduelles autorisées, en d'autres termes si le prix est supérieur à une valeur seuil de changement de plage, égale à la différence entre la première valeur V₁ et la borne inférieure B₅ de la plage T, commander le changement d'état d'au moins un bit 6, 7, 8 de la deuxième mémoire 36 du premier état vers le deuxième état (voir Figure 6), le nombre de bits 6, 7, 8 changeant d'état étant fonction de la différence entre les première et deuxième valeurs résiduelles V₁, V₂,
- valider le paiement,
- remplacer la première valeur de sauvegarde V₁' par une deuxième valeur de sauvegarde V₂' (Figure 7) égale à la deuxième valeur résiduelle V₂, et
- mettre fin à la transaction de paiement.

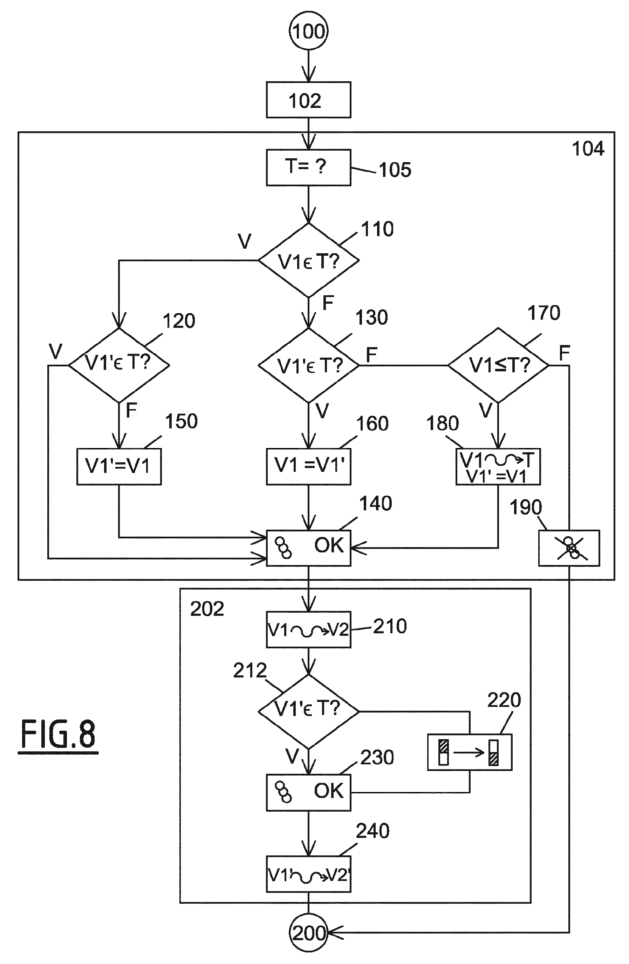

Un procédé de paiement au moyen du système de paiement 10 va maintenant être décrit, en regard de la Figure 8. Ce procédé survient lorsque l'utilisateur du support 14 souhaite régler un achat à un prix donné.

Lors d'une première étape 100, le terminal 12 et le support 14 sont mis en communication l'un avec l'autre. Cette opération est typiquement réalisée en plaçant le support 14 à une distance suffisante du terminal 12 pour permettre le couplage électromagnétique des antennes 20, 30 du terminal 12 et du support 14.

Puis, lors d'une première étape 102, le module de gestion 24 lit les première et deuxième mémoires 34, 36. En particulier, le terminal 12 récupère les informations enregistrées dans la première mémoire 34, et :
- dans la première variante de l'invention, décompte les bits 1, 2, 3, 4, 5, 6, 7, 8 de la deuxième mémoire 36 qui sont dans le premier état, ou
- dans la deuxième variante de l'invention, identifie le dernier bit de la deuxième mémoire 36 à avoir changé d'état

Cette première étape 102 est suivie d'une deuxième étape 104 de déduction de la première valeur résiduelle.

La deuxième étape 104 comprend une première sous-étape 105 de détermination de la plage T de valeurs résiduelles autorisées, au cours de laquelle :
- dans la première variante de l'invention, le module de gestion 24 détermine la plage T comme étant égale à la plage prédéterminée T₈ associée au nombre de bits 1, 2, 3, 4, 5, 6, 7, 8 décomptés comme étant dans le premier état, ou
- dans la deuxième variante de l'invention, le module de gestion 24 détermine la plage T comme étant égale à la plage prédéterminée T₈ associée au dernier bit de la mémoire 36 ayant changé d'état.

L'étape 105 est suivie par une étape 110 de contrôle de l'adéquation de l'image de la première valeur résiduelle V₁ avec la plage T de valeurs résiduelles autorisées. Lors de cette étape 110, le module de gestion 24 vérifie que l'image de la première valeur résiduelle V₁ est comprise dans la plage T. Si l'image de la première valeur résiduelle V₁ est bien dans la plage T, le procédé passe à une étape 120 ; dans le cas contraire, le procédé passe à une autre étape 130.

Les étapes 120 et 130 sont des étapes de contrôle de l'adéquation de la première valeur de sauvegarde V₁' avec la plage T de valeurs résiduelles autorisées. Au cours de ces étapes 120, 130, le module de gestion 24 vérifie que la première valeur de sauvegarde V₁' est comprise dans la plage T.

Si, lors de l'étape 120, la première valeur de sauvegarde V₁' est bien dans la plage T, le procédé passe à une étape 140 ; dans le cas contraire, le procédé passe à une autre étape 150.

Si, lors de l'étape 130, la première valeur de sauvegarde V₁' est bien dans la plage T, le procédé passe à une étape 160 ; dans le cas contraire, le procédé passe à une autre étape 170.

L'étape 140 est une étape d'autorisation de paiement. Au cours de cette étape, le module de gestion 24 déduit que la première valeur résiduelle est égale à l'image de la première valeur résiduelle V₁ enregistrée dans la première mémoire 34. Le module de gestion 24 considère alors que les conditions nécessaires à la réalisation effective du paiement sont remplies, et le notifie aux autres modules (non représentés) du terminal de paiement 12 également impliqués dans la transaction, par exemple à un module d'affichage.

L'étape 150 est une étape de mise en conformité de la première valeur de sauvegarde V₁' avec l'image de la première valeur résiduelle V₁. Au cours de cette étape, la première valeur de sauvegarde V₁' est changée pour être égale à l'image de la première valeur résiduelle V₁. En d'autres termes, la première valeur de sauvegarde V₁' est réécrite, la nouvelle première valeur de sauvegarde V₁' étant égale à l'image de la première valeur résiduelle V₁. L'étape 150 est suivie par l'étape 140.

L'étape 160 est une étape de mise en conformité de l'image de la première valeur résiduelle V₁ avec la première valeur de sauvegarde V₁'. Au cours de cette étape, l'image de la première valeur résiduelle V₁ est changée pour être égale à la première valeur de sauvegarde V₁'. En d'autres termes, l'image de la première valeur résiduelle V₁ est réécrite, la nouvelle image de la première valeur résiduelle V₁ étant égale à la valeur de sauvegarde V₁'. L'étape 160 est suivie par l'étape 140.

L'étape 170 est une nouvelle étape de contrôle de l'adéquation de l'image de la première valeur résiduelle V₁ avec la plage T de valeurs résiduelles autorisées. Au cours de cette étape, le module de gestion 24 contrôle si l'image de la première valeur résiduelle V₁ est inférieure à la plage T. Si l'image de la première valeur résiduelle V₁ est effectivement inférieure à la plage T, le procédé passe à une étape 180 ; dans le cas contraire, le procédé passe à une étape 190.

L'étape 180 est une étape de mise en conformité de l'image de la première valeur résiduelle V₁ et de la première valeur de sauvegarde V₁'. Au cours de cette étape 180, l'image de la première valeur résiduelle V₁ et la première valeur de sauvegarde V₁' sont changées pour être égales à la borne inférieure de la plage T. En d'autres termes, l'image de la première valeur résiduelle V₁ et la première valeur de sauvegarde V₁' sont réécrites, les nouvelles image de la première valeur résiduelle V₁ et première valeur de sauvegarde V₁' étant égales à la borne inférieure de la plage T. En variante, les nouvelles image de la première valeur résiduelle V₁ et première valeur de sauvegarde V₁' sont égales à une autre valeur de la plage T. L'étape 180 est suivie par l'étape 140.

L'étape 190 est une étape de refus du paiement. Au cours de cette étape, le module de gestion 24 constate l'échec de la déduction de la première valeur résiduelle du montant et en déduit que le support 14 a été falsifié. Il le refuse comme moyen de paiement, et le notifie aux autres modules du terminal de paiement 12 également impliqués dans la transaction. L'étape 190 est suivie par une étape 200 d'arrêt de la transaction.

Les étapes 110, 120, 130, 140, 150 160, 170, 180, 190 sont des sous-étapes de la deuxième étape 104.

A la deuxième étape 104 succède une troisième étape 202 de changement de la valeur résiduelle du montant. Au cours de cette étape 202, le module de gestion 24 intervient sur les mémoires 34, 36 du support 14 pour affecter au montant une deuxième valeur résiduelle, inférieure à la première valeur résiduelle, en remplacement de la première valeur résiduelle. En particulier, la deuxième valeur résiduelle est égale à la différence entre la première valeur résiduelle et le prix de l'achat.

La troisième étape 202 succède plus particulièrement à l'étape 140.

La troisième étape 202 comprend une première sous-étape 210 de changement de l'image de la valeur résiduelle du montant. Au cours de cette sous-étape 210, le module de gestion 24 remplace l'image de la première valeur résiduelle V₁ par une image de la deuxième valeur résiduelle V₂, égale à la deuxième valeur résiduelle.

La sous-étape 210 est suivie par une étape 212 de contrôle de l'appartenance la deuxième valeur résiduelle à la plage T de valeurs autorisées. Si la deuxième valeur résiduelle n'appartient pas à la plage T, l'étape 212 est suivie d'une étape 220 de changement d'état d'au moins un bit 6, 7, 8 de la deuxième mémoire 36, du premier état vers le deuxième état. Si la deuxième valeur résiduelle appartient à la plage T, l'étape 212 est directement suivie d'une étape 230 de validation du paiement.

Le nombre de bits 6, 7, 8 changeant d'état au cours de l'étape 220 est fonction de la différence entre la première et la deuxième valeurs résiduelles. Le nombre de bits 6, 7, 8 changeant d'état est tel que la deuxième valeur résiduelle est comprise dans la plage prédéterminée T₀, ..., Tᵢ, ..., T₈ associée au nombre de bits 1, 2, 3, 4, 5 restant dans le premier état suite au changement d'état des bits 6, 7, 8 (ou associée au dernier bit 6 ayant changé d'état suite au changement d'état desdits bits 6, 7, 8). L'étape 220 est suivie de l'étape 230.

Au cours de l'étape 230, le module de gestion 24 notifie les autres modules du terminal 12 également impliqués dans la transaction que le paiement a réussi. Une fois cette étape réalisée, l'utilisateur du support 14 est libre de jouir de son achat.

Une dernière étape 240 de changement de la valeur de la sauvegarde M' succède à l'étape 230. Au cours de cette étape, le module de gestion 24 remplace la première valeur de sauvegarde V₁' par une deuxième valeur de sauvegarde V₂', égale à la deuxième valeur résiduelle. L'étape 240 est suivie par l'étape 200 d'arrêt de la transaction.

Les étapes 212, 220, 230, 240 sont des sous-étapes de la troisième étape 202.

Au cours de l'étape 200, les échanges de données entre le terminal 12 et le support 14 s'arrêtent. Le module de gestion 24 le notifie au module d'affichage, qui indique que le support 14 peut être éloigné du terminal 12.

Grâce à l'invention, les risques de fraude sont réduits. En effet, un utilisateur mal intentionné ne pourrait tromper le système 10 qu'en modifiant l'image de la valeur résiduelle à l'intérieur de la plage T de valeurs résiduelles autorisées. Il suffit de choisir des bornes intermédiaires B₁, ..., B₈ entre les plages prédéterminées T₁, ..., T₈ à des valeurs appropriées pour que la fraude ne soit pas suffisamment profitable à l'utilisateur pour qu'il soit incité à la commettre.

De plus, le support 14 est peu onéreux à produire.

Enfin, l'atomicité et la cohérence de la transaction de paiement sont assurées. En effet, en cas d'interruption brutale et imprévue de la transaction, la présence de la valeur de sauvegarde V₁', V₂' et l'ordre des étapes du procédé de paiement permettent de rétablir la cohérence des données enregistrées sur le support 14.

On notera que, dans l'exemple donné ci-dessus, le support de paiement 14 n'est plus utilisable si l'image de la première valeur résiduelle V₁ est supérieure à la plage T de valeurs résiduelles autorisées. En variante, plutôt que d'être programmé pour refuser le paiement si l'image de la première valeur résiduelle V₁ est supérieure à la plage T de valeurs résiduelles autorisées, le module de gestion 24 est programmé pour changer l'image de la première valeur résiduelle V₁ de façon à ce qu'elle soit égale à la borne inférieure de la plage T de valeurs résiduelles autorisées.

Dans un deuxième mode de réalisation de l'invention, non illustré, la première valeur résiduelle en divisée en une première valeur résiduelle principale et une première valeur résiduelle secondaire. Avantageusement, la valeur résiduelle principale est formulée en nombre entier d'unités du montant, et la valeur résiduelle secondaire est formulée en nombre entier de subdivisions du montant. Dans le cas d'un montant monétaire en euros, la valeur résiduelle principale est ainsi égale à un nombre entier d'euros, et la valeur résiduelle secondaire est égale à un nombre entier de centimes d'euros.

Par exemple, la valeur résiduelle principale est égale à l'arrondi par troncature de la première valeur résiduelle à l'unité inférieure, et la valeur résiduelle secondaire est égale à la différence entre la première valeur résiduelle et la valeur résiduelle principale ; la première valeur résiduelle est ainsi reconstruite par addition des valeurs résiduelles principale et secondaire. En variante, la valeur résiduelle principale est égale à l'arrondi de la première valeur résiduelle à l'unité supérieure, et la valeur résiduelle secondaire est égale à la différence entre la valeur résiduelle principale et la première valeur résiduelle ; la première valeur résiduelle est alors égale à la différence entre les valeurs résiduelles principale et secondaire.

Une image de la valeur résiduelle principale est enregistrée dans la deuxième mémoire 36, et une image de la valeur résiduelle secondaire est enregistrée dans la première mémoire 34.

La valeur résiduelle principale est typiquement égale au nombre de bits 1, 2, 3, 4, 5, 6, 7, 8 qui sont dans le premier état.

L'image de la valeur résiduelle secondaire est typiquement un nombre entier compris entre 0 et n, où n est le nombre de subdivisions de chaque unité du montant. Par exemple, dans le cas d'un montant monétaire, n est égal à 99.

Le module de gestion 24 est programmé pour déduire la première valeur résiduelle du montant des images des valeurs résiduelles principale et secondaire. Typiquement, le module de gestion 24 est programmé pour :
- décompter le nombre de bits 1, 2, 3, 4, 5, 6, 7, 8 de la deuxième mémoire 36 qui sont dans le premier état, et en déduire que la valeur résiduelle principale est égale au nombre de bits décomptés,
- déduire la valeur résiduelle secondaire comme étant égale à l'image de la valeur résiduelle secondaire, multipliée par 1/(n+1), et
- déduire la première valeur résiduelle comme étant égale à la somme (en variante la différence) des valeurs résiduelles principales et secondaires.

Le module de gestion 24 est également programmé pour annuler la transaction si l'image de la valeur résiduelle secondaire est strictement supérieure à n. En variante, le module de gestion 24 est programmé pour déduire une valeur nulle de la valeur résiduelle secondaire si l'image de la valeur résiduelle secondaire est strictement supérieure à n.

Comme évoqué plus haut, le module de gestion 24 est en outre programmé pour affecter une deuxième valeur résiduelle au montant, en remplacement de la première valeur résiduelle, lorsqu'un paiement est effectué au moyen du support 14. A cet effet, le module de gestion 24 est programmé pour :
- subdiviser la deuxième valeur résiduelle en une deuxième valeur résiduelle principale et une deuxième valeur résiduelle secondaire,
- si la deuxième valeur résiduelle principale est différente de la première valeur résiduelle principale, commander le changement d'état d'au moins un bit 1, 2, 3, 4, 5, 6, 7, 8 de la deuxième mémoire 36, de façon à ce que le nombre de bits restant dans le premier état suite à ce changement d'état soit égal à la deuxième valeur résiduelle principale, et
- écrire dans la première mémoire 34 une image de la deuxième valeur résiduelle secondaire, en remplacement de l'image de la première valeur résiduelle secondaire.

Dans ce mode de réalisation, la sécurité du support 14 est préservée. En effet, du fait de l'irréversibilité des changements apportés aux bits 1, 2, 3, 4, 5, 6, 7, 8, un utilisateur mal intentionné ne pourrait pas modifier la valeur résiduelle principale du montant, sauf à réduire celle-ci, ce qui serait contre-productif.

Le module de gestion 24 n'a en outre pas à effectuer de contrôles croisés entre la première et la deuxième mémoires 34, 36 pour contrôler la validité des données de la première mémoire 34, contrairement au premier mode de réalisation. La transaction est ainsi plus rapide.

On notera que, dans les modes de réalisation donnés ci-dessus, la deuxième mémoire 36 ne comprend que huit bits 1, 2, 3, 4, 5, 6, 7, 8. Cette donnée n'est nullement limitative, et le nombre de bits de la deuxième mémoire 36 peut être quelconque. Le plus souvent, la deuxième mémoire 36 comprendra trente-deux bits.

## Revendications

1. Procédé de paiement au moyen d'un support de paiement (14) adapté pour dialoguer à distance avec un terminal de paiement (12), le support de paiement (14) étant porteur d'un montant et comprenant une première mémoire (34) réinscriptible et une deuxième mémoire (36) à fusibles, comprenant une pluralité de bits (1, 2, 3, 4, 5, 6, 7, 8) adaptés pour changer d'état une unique fois chacun, **caractérisé en ce qu'**il comprend les étapes successives suivantes :
- mise en communication du support de paiement (14) avec le terminal de paiement (12), le montant ayant une valeur avant paiement, ladite valeur avant paiement étant divisée en une valeur principale avant paiement, dont une image est enregistrée dans la deuxième mémoire (36), et une valeur secondaire avant paiement, dont une image est enregistrée dans la première mémoire (34)
- lecture des première et deuxième mémoires (34, 36), et
- déduction de la valeur avant paiement à partir des données lues dans les première et deuxième mémoires (34, 36),
et les étapes suivantes :
- affectation au montant d'une valeur après paiement, inférieure à la valeur avant paiement, en remplacement de la valeur avant paiement, et
- changement d'état d'au moins un bit (6, 7, 8) de la deuxième mémoire (36), le ou chaque bit (6, 7, 8) passant d'un premier état à un deuxième état, lorsque la différence entre les valeurs avant et après paiement est supérieure à une valeur seuil.

2. Procédé de paiement selon la revendication 1, **caractérisé en ce que** le nombre de bits (6, 7, 8) changeant d'état est fonction de la différence entre les valeurs avant et après paiement.

3. Procédé de paiement selon la revendication 1 ou 2, **caractérisé en ce que** la valeur principale avant paiement est égale au nombre de bits (1, 2, 3, 4, 5, 6, 7, 8) de la deuxième mémoire (36) qui sont dans le premier état avant que ne survienne le changement d'état d'au moins un bit (6, 7, 8).

4. Procédé de paiement selon l'une quelconque des revendications précédentes, **caractérisé en ce que** la valeur après paiement est divisée en une valeur principale après paiement et une valeur secondaire après paiement.

5. Procédé de paiement selon la revendication 4, **caractérisé en ce que** l'étape d'affectation au montant d'une valeur après paiement comprend les étapes suivantes :
- subdivision de la valeur après paiement en valeur principale après paiement et en valeur secondaire après paiement,
- si la valeur principale après paiement est différente de la valeur principale avant paiement, changement d'état d'au moins un bit (6, 7, 8) de la deuxième mémoire (36), et
- écriture, dans la première mémoire (34), d'une image de la valeur secondaire après paiement, en remplacement de l'image de la valeur secondaire avant paiement.

6. Procédé de paiement selon les revendications 3 et 5 prises ensemble, **caractérisé en ce que** le changement d'état d'au moins un bit (6, 7, 8) de la deuxième mémoire (36) est réalisé de manière à ce que le nombre de bits restant dans le premier état suite à ce changement d'état soit égal à la valeur principale après paiement.

7. Procédé de paiement selon l'une quelconque des revendications précédentes, **caractérisé en ce que** la valeur principale avant paiement est formulée en un nombre entier d'unités du montant, et la valeur secondaire avant paiement est formulée en nombre entier de subdivisions du montant.

8. Procédé de paiement selon la revendication 7, **caractérisé en ce que** l'image de la valeur secondaire avant paiement est un nombre entier compris entre 0 et n, où n est le nombre de subdivisions de chaque unité du montant.

9. Procédé de paiement selon la revendication 8, **caractérisé en ce que** l'étape de déduction de la valeur avant paiement comprend les sous-étapes suivantes :
- décompte du nombre de bits (1, 2, 3, 4, 5, 6, 7, 8) de la deuxième mémoire (36) qui sont dans le premier état, et déduction de la valeur principale avant paiement comme étant égale au nombre de bits décomptés,
- déduction de la valeur secondaire avant paiement comme étant égale à l'image de la valeur secondaire avant paiement, multipliée par 1/(n+1), et
- déduction de la valeur avant paiement comme étant égale à la somme des valeurs principales et secondaires avant paiement, ou à la différence entre lesdites valeurs principales et secondaires avant paiement.

10. Procédé de paiement selon la revendication 7, **caractérisé en ce que** l'image de la valeur secondaire avant paiement est strictement supérieure à n, où n est le nombre de subdivisions de chaque unité du montant, et la transaction est annulée après lecture de ladite image.

11. Procédé de paiement selon la revendication 7, **caractérisé en ce que** l'image de la valeur secondaire avant paiement est strictement supérieure à n, où n est le nombre de subdivisions de chaque unité du montant, et l'étape de déduction de la valeur avant paiement comprend les sous-étapes suivantes :
- décompte du nombre de bits (1, 2, 3, 4, 5, 6, 7, 8) de la deuxième mémoire (36) qui sont dans le premier état, et déduction de la valeur principale avant paiement comme étant égale au nombre de bits décomptés,
- déduction de la valeur secondaire avant paiement comme étant égale à zéro, et
- déduction de la valeur avant paiement comme étant égale à la somme des valeurs principales et secondaires avant paiement, ou à la différence entre lesdites valeurs principales et secondaires avant paiement.

12. Système de paiement (10) comprenant un terminal de paiement (12) et un support de paiement électronique (14) adapté pour dialoguer avec le terminal de paiement (12), le support de paiement (14) étant porteur d'un montant ayant une valeur avant paiement, ladite valeur avant paiement étant divisée en une valeur principale avant paiement et une valeur secondaire avant paiement, **caractérisé en ce que** le support de paiement (14) comprend :
- une première mémoire (34) réinscriptible, dans laquelle est enregistrée une image de la valeur secondaire avant paiement, et
- une deuxième mémoire (36) à fusibles, comprenant une pluralité de bits (1, 2, 3, 4, 5, 6, 7, 8) adaptés pour changer d'état une unique fois chacun, la valeur principale avant paiement étant égale au nombre de bits (1, 2, 3, 4, 5, 6, 7, 8) qui sont dans un premier état,
et **en ce que** le terminal de paiement (12) est programmé pour :
- déduire la valeur avant paiement de la lecture conjointe des première et deuxième mémoires (34, 36),
- affecter au montant une valeur après paiement, inférieure à la valeur avant paiement, en remplacement de la valeur avant paiement, et
- commander le changement d'état d'au moins un bit (6, 7, 8) de la deuxième mémoire (36) lorsque la différence entre les valeurs avant et après paiement est supérieure à une valeur seuil.

13. Système de paiement (10) selon la revendication 12, **caractérisé en ce que** le support de paiement (14) est un support sans contact, adapté pour dialoguer à distance avec le terminal de paiement (12)

14. Système de paiement (10) selon la revendication 12 ou 13, **caractérisé en ce que** le terminal de paiement (12) est programmé pour mettre en oeuvre un procédé selon l'une quelconque des revendications 1 à 11.

15. Terminal de paiement (12) d'un système de paiement (10) selon l'une quelconque des revendications 12 à 14.
